# EUROPEAN PATENT APPLICATION

(11) **EP 4 358 567 A1**
(43) Date of publication of application: **24.04.2024**
(21) Application number: 22824834.0
(22) Date of filing: 03.06.2022
(51) Int. Cl.: H04W 16/26, B63B 49/00, G08G 3/00, H04W 4/42, H04W 84/04

(54) **DATA COMMUNICATION SYSTEM IN SHIP**

(30) Priority: 14.06.2021 JP 2021098469
(71) Applicant: Future Quest Inc., Fukuoka-shi, Fukuoka 810-0041 (JP)
(72) Inventor: TAKIMOTO, Tomoki, Fukuoka-shi, Fukuoka 819-0043 (JP)
(74) Representative: Pinsent Masons LLP
(86) International application number: PCT/JP2022/022676
(87) International publication number: WO 2022/264842

(57) **Abstract**

The present invention provides a data communication system 1 that uses VDES, said system comprising a server 2 that transmits and receives information signals by using VHF waves, and a VDES terminal 10 that is provided on a ship and that transmits and/or receives information signals to and from the server 2, the VDES terminal 10 being provided with a communication unit 11 that transmits and/or receives information signals, a control unit 13 that analyzes the information signals to acquire information related to sea navigation and/or generates information signals including information related to sea navigation and transmits the information signals via the communication unit, and a display unit 12 having a function for displaying a display screen image for displaying information acquired by the control unit 13 and/or a function for displaying an operation screen image for inputting or forming information for the control unit to generate information signals.

## Description

### [Technical Field]

The present invention relates to a data communication system in a ship. The present invention relates to a data communication system which provides information such as route information, information on the sea, or messages to a ship on the sea.

### [Background Art]

For providing information from the ground to a ship sailing on the sea or exchanging information between ships on the sea or the like (hereinafter it may be referred to as information exchange or the like on the sea), it is common to deliver information with voice by using radio. While such information exchange or the like on the sea is possible for ships mounted with an apparatus for radio, small ships such as small fishing boats, leisure boats, or marine drones may not be mounted with an apparatus for radio, and information cannot be provided to such ships.

Thus, Patent Literatures 1 to 3 disclose techniques of providing information from the ground to a mobile terminal such as a mobile phone. With these techniques, even a mobile terminal can also receive information if information is provided via a mobile communication network. Thus, information necessary for sailing on the sea can be provided even to a ship which is not mounted with an apparatus for radio.

### [Citation List]

### [Patent Literature]

[PTL 1] Japanese Laid-Open Publication No. 2005-101992
[PTL 2] Japanese Laid-Open Publication No. 2016-177382
[PTL 3] Japanese Laid-Open Publication No. 2018-176871

### [Summary of Invention]

### [Technical Problem]

However, with the techniques of Patent Literatures 1 to 3, a mobile terminal cannot receive information if it is away from a base station of a mobile communication network by a certain distance or more, such that information cannot be received in a sea area away from the land. In addition, when the techniques of Patent Literatures 1 to 3 are employed, information cannot be shared between a ship mounted with an apparatus for radio and a ship having only a mobile terminal. Therefore, in a sea area where these ships are sailing at the same time, it is difficult to secure safety in sailing of the ships even when a small ship is able to obtain information with a mobile terminal.

Further, while there used to be a situation in which even a large ship could not obtain sufficient information with wireless communication alone, standards of VDES (VHF Data Exchange System) are being recently established as a system for performing information exchange or the like on the sea. The VDES was developed from an automatic identification system (AIS) employed to prevent collision between ships. By using the VDES, more information exchange or the like on the sea may be performed as compared to the AIS for exchanging ship movement information.

Given the above circumstance, the objective of the present invention is to provide a data communication system in a ship which can provide various types of information to a ship or the like by utilizing the VDES and also enables a ship on the sea to obtain necessary information at an appropriate timing. Furthermore, the objective of the present invention is to also enable communication with a ship with which communication is desired even when information for communicating with the ship is unknown.

### [Solution to Problem]

The data communication system in a ship of the first invention is a data communication system which provides an information signal comprising information relating to sailing on the sea by utilizing a VDES, the data communication system characterized by comprising: a server which sends and receives an information signal by a VHF wave; and a VDES terminal which is provided on a ship and sends and/or receives an information signal between the VDES terminal and the server, wherein the VDES terminal comprises: a communication unit which sends and/or receives an information signal; a control unit which analyzes the information signal received by the communication unit to obtain information relating to sailing on the sea and/or generates a transmission signal comprising information relating to sailing on the sea to transmit the transmission signal by the communication unit; and a display unit which has a function of displaying a display screen to display the information obtained by the control unit and/or a function of displaying an operation screen to input or form information for the control unit to generate the transmission signal.

For example, the present invention provides the following items.

### (Item 1)

A server device capable of communicating with a plurality of terminal devices on a plurality of ships, the server device comprising:
a communicating means which is configured to communicate with the plurality of terminal devices, the communicating means receiving a transmission signal from a first terminal device on a first ship of the plurality of ships, wherein the transmission signal comprises image data of an image of a second ship of the plurality of ships captured on the first ship;
an identifying means which is configured to identify a second terminal device on the second ship based on the image data; and
a forming means which is configured to form a communication line between the first terminal device and the second terminal device.

### (Item 2)

The server device of item 1, further comprising an obtaining means for obtaining location information on the plurality of terminal devices,
wherein the image data comprises information on a time when the image was captured, and
wherein the identifying means is configured to:
   identify a location of a ship captured in the image based on location information on the first terminal device at the time when the image was captured; and
   identify a ship present in the location at the time when the image was captured as the second ship.

### (Item 3)

The server device of item 1 or 2, wherein the communicating means is further configured to communicate with a relay apparatus, and the communicating means receives a relay transmission signal generated by the relay apparatus from the relay apparatus.

### (Item 4)

The server device of item 3, wherein the communicating means sends a control signal to the relay apparatus to cause the relay apparatus to modulate a period for transmitting a signal and/or intensity of a signal to be transmitted.

### (Item 5)

The server device of any one of items 1 to 4, wherein at least one of the first terminal device and the second terminal device is a VDES terminal.

### (Item 6)

The server device of item 5, wherein the communicating means communicates with the at least one of the first terminal device and the second terminal device by utilizing a VDES.

### (Item 7)

The server device of any one of items 1 to 6, wherein at least one of the first terminal device and the second terminal device is a mobile terminal comprising a VDES application.

### (Item 8)

The server device of item 7, wherein the communicating means communicates with the at least one of the first terminal device and the second terminal device via a mobile phone communication network.

### (Item 9)

A method executed in a server device capable of communicating with a plurality of terminal devices on a plurality of ships, the method comprising:
receiving a transmission signal from a first terminal device on a first ship of the plurality of ships, wherein the transmission signal comprises image data of an image of a second ship of the plurality of ships captured on the first ship;
identifying a second terminal device on the second ship based on the image data; and
forming a communication line between the first terminal device and the second terminal device.

### (Item 10)

A program executed in a server device capable of communicating with a plurality of terminal devices on a plurality of ships, the server device comprising a processor, wherein the program causes the processor to perform processing comprising:
receiving a transmission signal from a first terminal device on a first ship of the plurality of ships, wherein the transmission signal comprises image data of an image of a second ship of the plurality of ships captured on the first ship;
identifying a second terminal device on the second ship based on the image data; and
forming a communication line between the first terminal device and the second terminal device.

### (Item 11)

A data communication system comprising:
the server device of any one of items 1 to 8; and
a relay apparatus comprising a communicating means for communicating with the server device and the plurality of terminal devices.

### (Item 12)

The data communication system of item 11, wherein the relay apparatus further comprises a modulating means for modulating a period for transmitting a signal and/or intensity of a signal to be transmitted based on information received from at least one of the plurality of terminal devices and/or the server device.

### (Item 13)

The data communication system of item 11 or 12, wherein the relay apparatus further comprises:
an obtaining means for obtaining information relating to sailing on the water; and
a generating means for generating an information signal based on the obtained information, and
wherein the communicating means sends the information signal to at least one of the plurality of terminal devices and/or the server device.

### (Item 14)

A terminal device mounted on a ship, the terminal device comprising:
an image obtaining means for obtaining an image of a ship with which communication is desired; and
a communicating means which is configured to communicate with a terminal device on another ship and a server device, the communicating means being configured to:
   send a transmission signal to the server device, wherein the transmission signal comprises image data of an image of the another ship obtained by the image obtaining means; and
   communicate with the terminal device on the another ship via a communication line with the terminal device on the another ship which is formed by the server device based on the image data.

### (Item 15)

The terminal device of item 14, wherein the communicating means is further configured to modulate a period for transmitting a signal and/or intensity of a signal to be transmitted.

### (Item 16)

The terminal device of item 14 or 15, wherein the terminal device comprises:
a communication body having the communicating means; and
a display body having a control unit and a display unit, wherein the display body is detachable from the communication body.

### (Item 17)

A method executed in a terminal device mounted on a ship, the method comprising:
obtaining an image of another ship with which communication is desired;
sending a transmission signal to a server device, wherein the transmission signal comprises image data of the image of the another ship obtained by the image obtaining means; and
communicating with a terminal device on the another ship via a communication line with the terminal device on the another ship which is formed by the server device based on the image data.

### (Item 18)

A program executed in a terminal device mounted on a ship, the terminal device comprising a processor, wherein the program causes the processor to perform processing comprising:
obtaining an image of another ship with which communication is desired;
sending a transmission signal to a server device, wherein the transmission signal comprises image data of the image of the another ship obtained by the image obtaining means; and
communicating with a terminal device on the another ship via a communication line with the terminal device on the another ship which is formed by the server device based on the image data.

### (Item 19)

A data communication system comprising:
the server device of any one of items 1 to 8; and
the terminal device of any one of items 14 to 16.

### (Item 20)

The data communication system of any one of items 11 to 13, further comprising the terminal device of any one of items 14 to 16.

For example, the present invention further provides the following items.

### (Item A1)

A data communication system which provides an information signal comprising information relating to sailing on the sea by utilizing a VDES, the data communication system characterized by comprising:
a server which sends and receives an information signal by a VHF wave; and
a VDES terminal which is provided on a ship and sends and/or receives an information signal between the VDES terminal and the server,
wherein the VDES terminal comprises:
   a communication unit which sends and/or receives an information signal;
   a control unit which analyzes the information signal received by the communication unit to obtain information relating to sailing on the sea and/or generates an information signal comprising the information relating to sailing on the sea to transmit the information signal by the communication unit; and
   a display unit which has a function of displaying a display screen to display the information obtained by the control unit and/or a function of displaying an operation screen to input or form information for the control unit to generate the information signal.

### (Item A2)

The data communication system in a ship of item A1, characterized in that the server has a function of transmitting an information signal via a mobile phone communication network,
the data communication system comprising a VDES application installed in a mobile terminal which is connectable to the mobile phone communication network,
wherein the VDES application has:
   a receiving function of receiving an information signal;
   an information obtaining function of obtaining information relating to sailing on the sea from the information signal received by the receiving function; and
   a displaying function of displaying the information obtaining function on a display screen of the mobile terminal.

### (Item A3)

The data communication system in a ship of item A1 or A2, characterized in that the VDES application has: a signal generating function of generating an information signal based on an input from the mobile terminal; and a sending function of sending the generated information signal to the mobile phone communication network.

### (Item A4)

The data communication system in a ship of item A3, characterized in that:
information relating to a ship mounted with the VDES terminal and information on the VDES terminal are saved in the server while being associated with each other; and
a ship mounted with a mobile terminal installed with the VDES application and information on the VDES application are saved in the server while being associated with each other,
wherein the control unit of the VDES terminal has:
   a function of obtaining location information on the VDES terminal;
   a function of generating image data comprising an image of a ship captured by a capturing means equipped in the VDES terminal, wherein the ship is a ship with which communication is desired; and
   a function of sending an information signal after including the location information on the VDES terminal and the image data in the information signal,
wherein a control unit of the server has:
   a function of identifying the ship captured in the image data and the VDES application installed in the mobile terminal mounted on the ship based on the location information on the VDES terminal and the image data comprised in the information signal; and
   a function of sending the information signal to the identified VDES application and forming a communication line between the VDES terminal which transmitted the information signal and the identified VDES application.

### (Item A5)

The data communication system in a ship of item A3, characterized in that:
information relating to a ship mounted with the VDES terminal and information on the VDES terminal are saved in the server while being associated with each other; and
a ship mounted with a mobile terminal installed with the VDES application and information on the VDES application are saved in the server while being associated with each other,
wherein the VDES application comprises:
   a function of obtaining location information on the mobile terminal installed with the VDES application; and
   a function of generating image data comprising an image of a ship captured by a capturing means equipped in the mobile terminal installed with the VDES application, wherein the ship is a ship with which communication is desired,
wherein the signal generating function has a function of sending an information signal after including the location information on the mobile terminal and the image data in the information signal,
wherein a control unit of the server has:
   a function of identifying the ship captured in the image data and the VDES terminal mounted on the ship and/or the VDES application installed in the mobile terminal mounted on the ship based on the location information on the mobile terminal and the image data comprised in the information signal; and
   a function of sending the information signal to the identified VDES terminal and/or the identified VDES application and forming a communication line between the VDES application which transmitted the information signal and the identified VDES terminal and/or the identified VDES application.

### (Item A6)

The data communication system in a ship of any one of items A1 to A5, characterized by having a relay apparatus provided on the sea which receives an information signal transmitted from the server and/or the VDES terminal,
wherein the relay apparatus has:
   a receiving function of receiving an information signal transmitted from the server and/or the VDES terminal;
   an information obtaining function of obtaining information relating to sailing on the sea from the information signal received by the receiving function; and
   a transmitting function of transmitting the information signal received by the receiving function,
wherein the information obtaining function has a function of adjusting a period for transmitting the information signal and intensity of the signal to be transmitted by the transmitting function based on the obtained information relating to sailing on the sea.

### (Item A7)

The data communication system in a ship of item A6, characterized in that the information obtaining function of the relay apparatus has:
a function of generating an information signal based on information relating to sailing on the sea obtained from an information signal received by the receiving function; and
a function of causing the transmitting function to transmit the generated information signal instead of the information signal received by the receiving function or both the information signal received by the receiving function and the generated information signal.

### (Item A8)

The data communication system in a ship of any one of items A1 to A7, characterized in that the control unit of the VDES terminal has a function of adjusting a period for transmitting the information signal and intensity of the signal to be transmitted by the communication unit based on information relating to sailing on the sea obtained from the received information signal.

### (Item A9)

The data communication system in a ship of any one of items A1 to A8, characterized in that the VDES terminal comprises:
a communication body having the communication unit; and
a display body having the control unit and the display unit,
wherein the display body is detachably provided to the communication body.

### [Advantageous Effects of Invention]

According to the first invention, various types of information relating to sailing on the sea can be obtained by equipping a ship with a VDES terminal. Moreover, the present invention enables communication with a ship with which communication is desired even when information for communicating with the ship is unknown.

### [Brief Description of Drawings]

[Figure 1] Figure **1** is a schematic explanatory diagram of a data communication system **1** in a ship of the present embodiment.
[Figure 2] Figure **2** is a schematic block diagram of the data communication system **1** in a ship of the present embodiment.
[Figure 3] Figure **3** is a diagram showing one example of a VDES terminal **10. (A)** is one example of an integrated VDES terminal **10, (B)** is one example of information displayed on a display unit **12,** and **(C)** is one example of a separatable VDES terminal **10.**

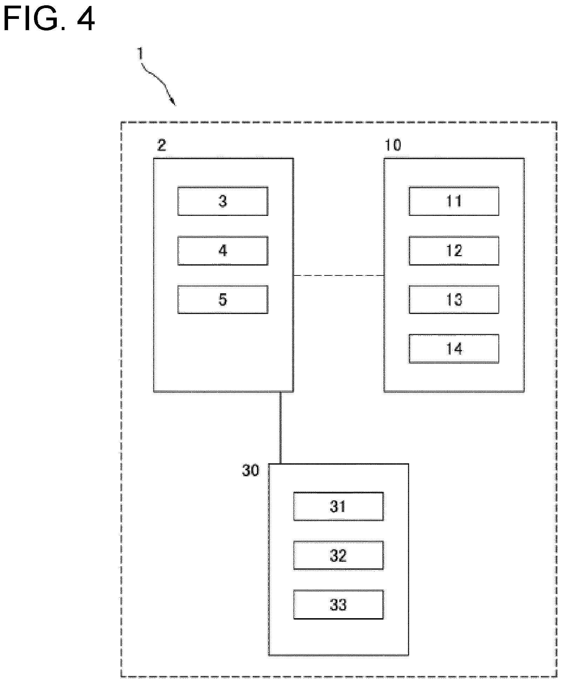

[Figure 4] Figure **4** is a schematic block diagram of the data communication system **1** in a ship of the present embodiment provided with a relay apparatus **30.**
[Figure 5] Figure **5** is a schematic explanatory diagram explaining information transmission from the relay apparatus **30.**
[Figure 6] Figure **6** is a schematic explanatory diagram of the data communication system **1** in a ship of the present embodiment which transmits information using a mobile notification network **MN.**
[Figure 7] In Figure **7, (A)** is a flowchart forming a communication line between a VDES terminal **10** that is a transmission source and a VDES application installed in a mobile terminal **M** while **(B)** is a flowchart forming a communication line between a VDES application installed in a mobile terminal **M** that is a transmission source and a VDES terminal **10** and/or a VDES application installed in a mobile terminal **M.**
[Figure 8] Figure **8** is a diagram showing one example of a dataflow between a server **2** and terminal devices.

### [Description of Embodiments]

The data communication system in a ship of the present embodiment is a system which can provide appropriate information to a sailing ship, which enables an information signal comprising information relating to sailing on the sea to be mutually exchanged between a server that is a base station and a VDES terminal mounted on a ship, or between VDES terminals.

Examples of information exchanged by an information signal comprising information relating to sailing on the sea (hereinafter it may be simply referred to as an information signal) can include the following information. Note that the information comprised in an information signal is not limited to these types of information.

### 1) Information relating to an individual ship

Information necessary for work management (such as information relating to a ship owner, consigner, or sailor or information relating to a marine insurance)
Information necessary for ship management (such as marine work, engineering work, or ordering)

### 2) Information necessary for general ship operation

Weather information in a sea area
Information on a harbor at which a ship stops

### 3) Information necessary for information communication

Information on a VDES terminal mounted on a ship (such as ID number or location information)
Information on a ship mounted with a VDES terminal (such as ship identification number of the ship)

Information relating to sailing on the sea as used in the explanation below means all or a part of the above-described information. Further, an information signal includes all or a part of the above-described information.

### <Data communication system 1 in a ship>

The configuration of a data communication system **1** in a ship of the present embodiment (hereinafter it may be simply referred to as the data communication system **1)** is explained. In the present embodiment, the data communication system **1** comprises a server **2** and a terminal device. The terminal device can be any terminal device as long as it can communicate with the server **2.** The terminal device may be a VDES terminal **10** which is described below, or may be a mobile terminal **M** comprising a VDES application which is described below.

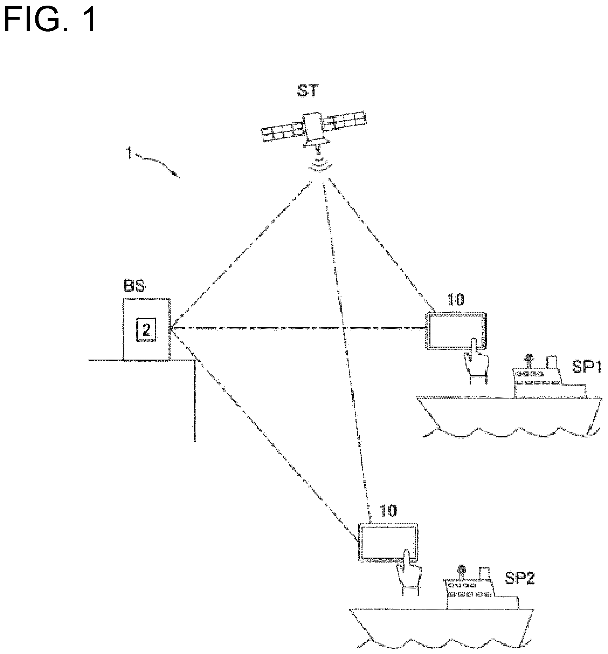

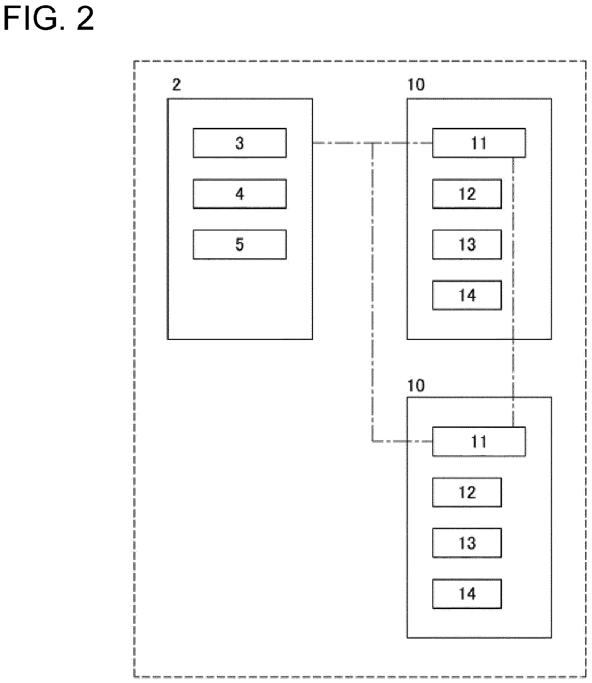

As shown in Figure **1****,** the data communication system **1** comprises the server **2** placed on a base station **BS** provided on the ground. As shown in Figure **2****,** the server **2** has a server control unit **3,** a storage unit **4,** and an input unit **5** for inputting information. For example, a sailor can input information or an administrator of the system can input information into the input unit **5.**

Information relating to sailing on the sea of a ship as described above is stored in the storage unit **4.** For example, identification information on a ship which is sailing or scheduled to sail in a sea area under the control of the server **2** (it may be simply referred to as a ship) and/or prestored information such as ship owner, consigner, or marine insurance of each ship (preregistered information) are stored in the storage unit **4.**

Further, information such as identification number of a VDES terminal **10** described below (such as ID number of the VDES terminal **10),** that is, information on the VDES terminal **10** mounted on a ship, is also stored in the storage unit **4.** In addition, information on the VDES terminal **10** mounted on a ship and information such as identification information on the ship mounted with the VDES terminal **10** are stored in the storage unit **4** while being associated with each other.

Further, the storage unit **4** also has a function of storing information supplied from the server control unit **3** and/or has a function of updating the stored information based on an instruction from the server control unit **3** and/or the input unit **5** as described below. Furthermore, the relationship between information on a ship mounted with the VDES terminal **10** and information on the VDES terminal **10** mounted on the ship may be stored or updated based on information supplied from the server control unit **3.**

In addition, the storage unit **4** also has a function of providing necessary information from information stored in the storage unit **4** such as preregistered information based on an instruction from the server control unit **3** and/or the input unit **5.**

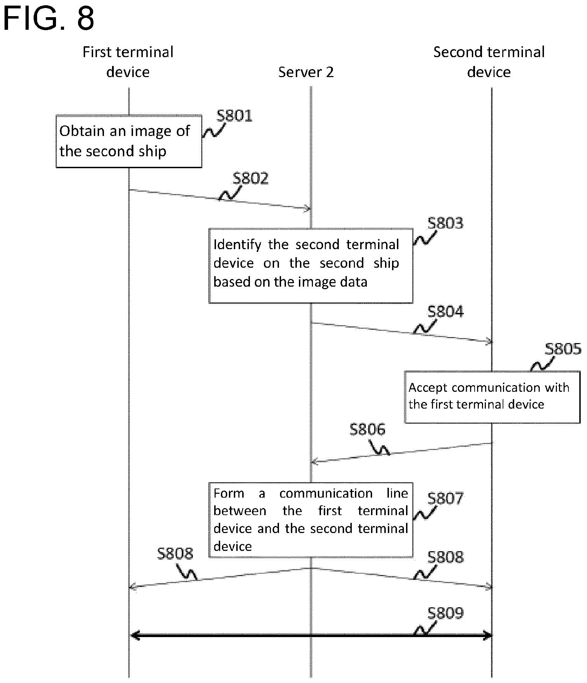

A program necessary for executing processing of the server **2,** data necessary for executing the program, and the like are stored in the storage unit **4.** A program for causing a processor to perform processing to enable communication between terminal devices (e.g., a program which materializes processing performed by the server **2** in the flow shown in Figure **8** described below) may be stored in the storage unit **4.** In this case, a program may be stored in the storage unit **4** in any manner. For example, a program may be preinstalled in the storage unit **4.** Alternatively, a program may be installed in the storage unit **4** by being downloaded via a network. In this case, the network may be any type. The storage unit **4** can be implemented by any storing means. Alternatively, a program may be stored in a computer-readable storage medium and installed in the storage unit **4** by reading the computer-readable storage medium.

The storage unit **4** can be configured by any storing means. The storage unit **4** may be configured as a single hardware part or may be configured as a plurality of hardware parts. For example, the storage unit **4** may be configured as an external hard disk device of the server **2** or may be configured as a storage on a cloud connected via a network.

The server control unit **3** is configured to be able to communicate with the outside of the server **2.** In other words, the server control unit **3** can function as a communicating means of the server **2.** For example, a communicating means can communicate with a terminal device mounted on a ship (e.g., the VDES terminal **10** described below or the mobile terminal **M** comprising a VDES application described below). A communicating means can also communicate with a relay apparatus described below. A communicating means can preferably send and receive a VHF wave by utilizing a VDES. However, the present invention is not limited to those sending and receiving a VHF wave by utilizing a VDES, but is also applicable to those utilizing any other communication system. A communicating means can send and receive a radio wave with any other frequency.

The server control unit **3** has a function of analyzing obtained information to store the information in the storage unit **4** or update the information stored in the storage unit **4** depending on the content of the information. The server control unit **3** has a function of displaying the analyzed information on a general display device (including a function of forming a display screen).

Specifically, the server **2** can receive an information signal sent from a communication device (e.g., a terminal device in the data communication system **1** and/or a relay apparatus described below) which receives an information signal supplied by a VDES. The server control unit **3** obtains information comprised in the information signal sent from the communication device and analyzes the obtained information to store the information in the storage unit **4** or display the information on a general display device depending on the content of the information. For example, if information relating to the location or sailing speed of a certain ship **SP** is comprised in an information signal, an image in which the sailing location of the ship **SP** is disposed on a chart is displayed on a display device. Further, if sailing information on the ship **SP** in the past is recorded, newly obtained information is stored in the storage unit **4** while being associated with the ship **SP.** If information on the ship **SP** comprised in an information signal is information that is not stored in the storage unit **4,** information including identification information relating to the ship **SP** and information including identification information of the VDES terminal **10** which transmitted the information signal are newly stored in the storage unit **4.**

Further, the server control unit **3** also has a function of generating, based on information stored in the storage unit **4,** analyzed information, information input from the input unit **5** and the like, an information signal comprising said information.

In addition, the server control unit **3** also has a function of transmitting, according to an instruction from the input unit **5** and/or at a predetermined timing and/or based on information comprised in an information signal received from a communication device (hereinafter referred to as a receipt signal), an information signal generated by the server control unit **3** (hereinafter referred to as a transmission signal) to the same or another communication device via a VDES.

Furthermore, in a preferred embodiment, the server control unit **3** can have: a function of identifying, based on information comprised in a receipt signal from a terminal device, a terminal device (second terminal device) on another ship with which the terminal device (first terminal device) desires to communicate; and a function of forming a communication line between the first terminal device and the identified second terminal device. In other words, the server control unit **3** can function as an identifying means for identifying the second terminal device and a forming means for forming a communication line between the first terminal device and the second terminal device.

For example, the identifying means can identify the second terminal device based on image data received from the first terminal device. At this time, the image data is image data of a captured image of a ship mounted with the second terminal device. For example, the identifying means can identify a ship captured in the image by image analysis and identify a terminal device mounted on the identified ship as the second terminal device.

More preferably, for example, the identifying means can identify the second terminal device based on image data received from the first terminal device and location information on the first terminal device and the second terminal device. At this time, the image data is image data of a captured image of a ship mounted with the second terminal device, which can comprise information on a time when the image was captured. For example, the location information can be comprised in a receipt signal from each of the first terminal device and the second terminal device. For example, the identifying means can: identify a location of a ship captured in an image based on the location information on the first terminal device at a time when the image was captured; and identify a ship present in the identified location at the time when the image was captured as a ship mounted with the second terminal device. By doing so, the second terminal device with which communication is desired can be identified at a higher accuracy. In this manner, the identifying means can enable the first terminal device to communicate with the second terminal device even when the first terminal device does not have information for communicating with the second terminal device with which communication is desired.

The server control unit **3** can be implemented by a processor. The processor reads out a program stored in the storage unit **4** and executes the program. This enables the server **2** to function as a device for executing a desired step. The processor may be a single processor or may be a plurality of processors.

Each of the components of the above-described server **2** may be configured by a single hardware part or may be configured by a plurality of hardware parts. When each of the components is configured by a plurality of hardware parts, the hardware parts may be connected in any manner. The hardware parts may be wirelessly connected or may be connected by wire. The server **2** is not limited to a particular hardware configuration. Configuring the server control unit **3** by an analog circuit instead of a digital circuit also remains within the scope of the present invention. The configuration of the server **2** is not limited to those described above as long as the function thereof can be materialized.

### <VDES terminal 10>

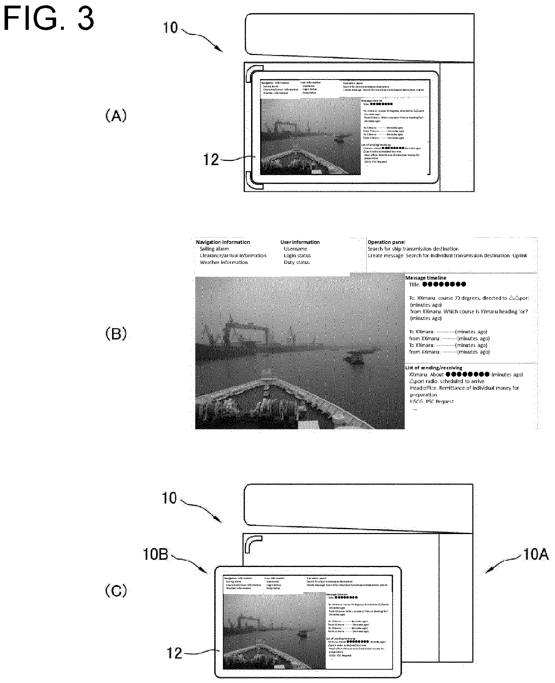

As shown in Figure **1****,** the data communication system **1** comprises a VDES terminal **10** which is mounted on a ship and sends and receives an information signal by utilizing a VDES (see Figure **3****).** As shown in Figure **2****,** the VDES terminal **10** comprises a communication unit **11,** a display unit **12,** a control unit **13,** and a storage unit **14.**

The communication unit **11** has a function of utilizing a VDES to receive a transmission signal transmitted by the server **2** or transmit a terminal transmission signal (information signal transmitted by the VDES terminal **10)** . For example, the communication unit **11** can employ a common VHF antenna capable of sending and receiving a VHF wave. Note that the subject of sending and receiving an information signal by the communication unit **11** by utilizing a VDES is not limited to the above-described server **2,** but also includes a VDES terminal **10** mounted on another ship. Furthermore, the communication unit **11** may be configured to send and receive an information signal to/from a relay apparatus described below. In a preferred embodiment, the communication unit **11** can communicate with the server **2** by utilizing a VDES. However, the present invention is not limited to those sending and receiving a VHF wave by utilizing a VDES, but is also applicable to those utilizing any other communication system. The communication unit **11** can send and receive a radio wave with any other frequency.

A transmission signal transmitted from a server and a terminal transmission signal transmitted by another terminal device are received by the communication unit **11** and then supplied to the control unit **13.** The control unit **13** has a function of analyzing the supplied transmission signal and terminal transmission signal. That is, the control unit **13** has a function of obtaining information comprised in the received transmission signal and terminal transmission signal and analyzing the obtained information to store the information in the storage unit **14** or display the information on the display unit **12** depending on the content of the information (including a function of forming a display screen) (see Figures **3(A)** and **(B)****).** Further, the control unit **13** also has a function of generating, based on information stored in the storage unit **14,** analyzed information, and an instruction and information input from the display unit **12,** a terminal transmission signal comprising said information. That is, the control unit **13** has a similar function to the server control unit **3** in the server **2.**

Further, the control unit **13** may also have a function of obtaining location information (information such as latitude and longitude) on the VDES terminal **10.** In this case, while the method by which the control unit **13** obtains the location information is not particularly limited, for example, a satellite positioning system such as Global Navigation Satellite System (GNSS) can be utilized to obtain the location information on the VDES terminal **10.** Further, when the control unit **13** does not have a function of obtaining location information, if a ship has a device to obtain location information, location information obtained by the device may be supplied to the control unit **13.**

The display unit **12** has a function of displaying a display screen to display information obtained by the control unit **13** and information generated by the control unit **13** (see Figures **3(A)** and **(B)****).** Further, when a touch panel is employed for the display unit **12** or the VDES terminal **10** comprises an input device (e.g., keyboard, trackpad or the like), a function of displaying a screen which a sailor can operate can be provided to the display unit **12.** For example, a function of displaying a screen that enables inputting information necessary for the control unit **13** to generate a terminal transmission signal, generating a terminal transmission signal itself, or generating information to be comprised in a terminal transmission signal may be provided as a screen which a sailor can operate.

The storage unit **14** also has a function of storing information supplied from the control unit **13** or updating stored information based on an instruction from the control unit **13.** Further, information relating to a ship (such as ship identification number of the ship) mounted with the VDES terminal **10,** an identification number (such as ID number) of the VDES terminal mounted on the ship, information necessary for sailing of another ship, and the like are prestored in the storage unit **14.** In addition, the storage unit **14** also has a function of supplying stored information to the control unit **13** or the display unit **12** based on an instruction from the control unit **13** or the display unit **12.** That is, the storage unit **14** has a similar function to the storage unit **4** in the server **2.**

Since the data communication system **1** in a ship in the present embodiment has the above-described configuration, information necessary for ship sailing can be exchanged with the server **2** placed on the ground and another VDES terminal **10.** In other words, information necessary for ship sailing can be exchanged between a base station having the server **2** placed on the ground and a ship mounted with the VDES terminal **10,** and between ships mounted with the VDES terminal **10.** This is preferably performed via a VDES. By utilizing a VDES, various types of information can be shared as compared to an AIS. Thus, if a sailor on a ship refers to information displayed on the display unit **12** of the VDES terminal **10,** ship sailing which is safer than prior sailing is possible.

Further, if a ship can obtain a situation of a harbor or the like or a situation of other ships or the like, the ship can be ready for various points by the time the ship stops at the harbor. If a base station can grasp a situation of each ship, the base station can arrange operations such as unloading or repair after a ship stops at the harbor. Thus, it is also possible to improve the efficiency of operations at a ship or harbor.

### <Regarding the VDES terminal 10>

In the above-described example, the case where the communication unit **11** of the VDES terminal **10** has both a function of receiving a transmission signal transmitted by the server **2** and a function of sending a terminal transmission signal generated by the control unit **13** was explained. However, the communication unit **11** of the VDES terminal **10** does not necessarily have to have a function of sending a terminal transmission signal. The communication unit **11** of a VDES terminal **10** that does not have a function of sending a terminal transmission signal may be configured to have only a function of receiving a transmission signal transmitted by the server **2** and a terminal transmission signal transmitted by another VDES terminal **10.**

Further, in the above-described example, the case where the control unit **13** has both a function of analyzing a transmission signal and a terminal transmission signal received by the communication unit **11** and obtaining information relating to sailing on the sea and a function of generating a terminal transmission signal comprising information relating to sailing on the sea was explained. However, the control unit **13** of the VDES terminal **10** does not necessarily have to have a function of generating a terminal transmission signal.

Further, in the above-described example, the case where the display unit **12** has both a function of displaying a display screen to display information obtained by the control unit **13** and a function of displaying an operation screen for inputting information necessary for the control unit **13** to generate a terminal transmission signal or generating a terminal transmission signal was explained. However, the display unit **12** of the VDES terminal **10** does not necessarily have to have a function of displaying an operation screen for inputting information necessary for the control unit **13** to generate a terminal transmission signal or generating a terminal transmission signal.

### <System using a mobile phone communication network MN>

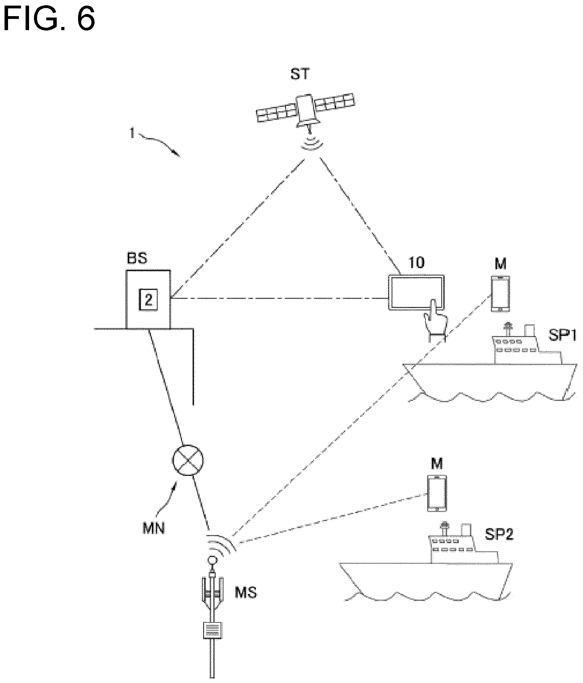

In the above-described example, the case where the data communication system **1** in a ship in the present embodiment sends and receives an information signal by using a VDES was explained. However, the data communication system **1** may be configured to be able to receive an information signal (transmission signal or terminal transmission signal) by utilizing a mobile phone communication network **MN** as well. In this case, since an information signal can be also received by the mobile terminal **M** such as a mobile phone or a smartphone which can be connected to the mobile phone communication network **MN,** a dedicated VDES terminal **10** no longer needs to be mounted on a ship or the like. Therefore, even a small ship, a general fishing boat or the like **(SP2** in Figure **6****)** which cannot be equipped with the VDES terminal **10** can also obtain information relating to sailing on the sea from an information signal. Needless to say, a sailor on a ship mounted with a dedicated VDES terminal **10** may send and receive an information signal with not only the VDES terminal **10** but also the mobile terminal **M.** In this example, the data communication system **1** comprises the mobile terminal **M** instead of the VDES terminal or in addition to the VDES terminal.

In the present embodiment, specifically, the server **2** can be provided with a function of sending a transmission signal through the mobile phone communication network **MN.** That is, the server **2** can be provided with a function of converting a transmission signal to be sent through a VDES into a transmission signal which can be also sent through the mobile phone communication network **MN** (or separately generating a transmission signal which can be sent through the mobile phone communication network **MN)** and transmitting the transmission signal to the mobile phone communication network **MN.**

Further, a VDES application which causes the mobile terminal **M** to exhibit an equivalent function to that of the communication unit **11,** the control unit **13,** and the display unit **12** in the VDES terminal **10** is installed in the mobile terminal **M.** The VDES application has a function of causing the mobile terminal **M** in which the application is installed to exhibit various functions. Specifically, a VDES application has a function of causing the mobile terminal **M** to exhibit a receiving function of receiving a transmission signal as in the communication unit **11** in the VDES terminal **10.** Further, a VDES application has a function of causing the mobile terminal **M** to exhibit an information obtaining function of obtaining information relating to sailing on the sea from a transmission signal as in the control unit **13** in the VDES terminal **10.** Furthermore, a VDES application has a function of causing the mobile terminal **M** to exhibit a displaying function of displaying information obtained by the information obtaining function on a display screen of the mobile terminal **M** as in the display unit **12** in the VDES terminal **10.** In addition, a VDES application has a function of causing the mobile terminal **M** to store information obtained by the information obtaining function in a memory or the like of the mobile terminal **M** or change stored information as in the storage unit **14** in the VDES terminal **10.** Moreover, a VDES application also has a function of storing information on the VDES application (such as ID information on the VDES application) and a ship mounted with the mobile terminal **M** installed with the VDES application in a memory or the like of the mobile terminal **M** while associating said information and said ship with each other. At this time, a VDES application may be installed in the mobile terminal **M** in any manner. For example, a VDES application may be preinstalled in the mobile terminal **M.** Alternatively, a VDES application may be installed in the mobile terminal **M** by being downloaded via a network. Alternatively, a VDES application may be stored in a computer-readable storage medium and installed in the mobile terminal **M** by reading the computer-readable storage medium.

Further, a VDES application may have a function of obtaining location information (information such as latitude and longitude) on the mobile terminal **M** in which the VDES application is installed. In this case, while a method by which the VDES application obtains the location information is not particularly limited, for example, a satellite positioning system such as Global Navigation Satellite System (GNSS) such as GPS can be utilized to obtain the location information on the mobile terminal **M.** Further, when a VDES application does not have a function of obtaining location information, if a ship has a device to obtain location information, location information obtained by the device may be provided to the VDES application.

If the mobile terminal **M** installed with such a VDES application is used, even a small ship, a general fishing boat or the like not having a VDES terminal **10** can also obtain information relating to sailing on the sea and obtain information relating to a sea area in which the ship is sailing or a sea area in which the ship is going to sail. That is, the mobile terminal **M** receives a transmission signal sent by the server **2** through the mobile phone communication network **MN,** whereby even a small ship, a general fishing boat or the like not having a VDES terminal **10** can also obtain information relating to sailing on the sea (see Figure **6****)** .

Further, in addition to the above-described function, a VDES application may have a function of causing the mobile terminal **M** to exhibit a signal generating function of generating a mobile transmission signal comprising information relating to sailing on the sea. In this case, the VDES application is also provided with a function of causing the mobile terminal **M** to exhibit a sending function of sending the mobile transmission signal generated by the signal generating function to the mobile phone communication network **MN.**

Further, when a VDES application has a function of generating and transmitting a mobile transmission signal, the server **2** is provided with a function of receiving a mobile transmission signal received by a mobile phone base station **MS** through the mobile phone communication network **MN** and extracting information relating to sailing on the sea comprised in the mobile transmission signal (see Figure **6****).** In this case, the storage unit **4** of the server **2** stores information such as identification number of the VDES application (such as ID number of the VDES application) and information such as identification information on a ship mounted with the mobile terminal **M** installed with the VDES application while associating said information with each other for the VDES application as well in the same manner as the VDES terminal **10.**

Note that the relationship between information on a VDES application and information on a ship mounted with the mobile terminal **M** installed with the VDES application may be stored or updated based on information supplied from the server control unit **3.**

If the server **2** and a VDES application also have the above-described function, even a small ship, a general fishing boat or the like not having a VDES terminal **10** can provide information relating to ship sailing to another ship via the server **2** on the ground by transmitting a mobile transmission signal from the mobile terminal **M.** That is, if a mobile transmission signal comprises information relating to a ship transmitting this mobile transmission signal and location information on the ship as well as other additional information that is desired to be delivered (abnormalities on the sea such as occurrence of an emergency), said information can be delivered to the server **2** on the ground or another ship.

Moreover, since information can be supplied between a small ship not having a VDES terminal **10** and a large ship having a VDES terminal **10,** it is possible to increase safety in sailing in an area where many small ships and large ships are sailing along the coast or the like.

Note that the receiving function of a VDES application is not limited to those actuating the mobile terminal **M** by the function of the VDES application to receive an information signal (transmission signal or terminal transmission signal) or send a mobile transmission signal, but may be those actuating the mobile terminal **M** so as to utilize a communicating function equipped with the mobile terminal **M** to receive an information signal (transmission signal or terminal transmission signal) or send a mobile transmission signal.

Further, the displaying function of a VDES application is not limited to those actuating the mobile terminal **M** by the function of the VDES application to display information obtained by the information obtaining function on a display screen of the mobile terminal **M,** but may be those utilizing the displaying function equipped with the mobile terminal **M** to display information obtained by the information obtaining function on a display screen of the mobile terminal **M.**

Further, if there is a distance from the mobile phone base station **MS,** the mobile terminal **M** may be unable to obtain information. However, if a relay apparatus **30** as described below or a relay base separately provided on the sea is provided as the mobile phone base station **MS** or a line of a satellite phone is used as a mobile phone communication network, it is also possible to receive an information signal (transmission signal or terminal transmission signal) or send a mobile transmission signal by the mobile terminal **M** even in a sea area away from the land.

### <Direct communication function between the VDES terminals 10>

The above-described example assumes a case where the data communication system **1** in a ship of the present embodiment sends a terminal transmission signal to the server **2** or many unspecified VDES terminals **10** or receives a transmission signal transmitted by the server **2** or a terminal transmission signal transmitted by many unspecified VDES terminals **10.**

However, the data communication system **1** in a ship of the present embodiment may have a function of sending a terminal transmission signal to a particular VDES terminal **10.** That is, the system may have a function of enabling communication between the VDES terminals **10** mounted on particular ships.

For example, when a certain ship **SPA** has confirmed that there is a danger on a route, it is desirable that the ship **SPA** directly transfers the information to a ship **SPB** which is going to sail on the same route afterward. In this case, the data communication system **1** in a ship of the present embodiment can directly provide information from a VDES terminal **10A** mounted on the ship **SPA** to a VDES terminal **10B** mounted on the ship **SPB.** A VDES terminal **10** transmits a terminal transmission signal (attribute signal) comprising or comprising only an ID number of the VDES terminal **10,** location information on the VDES terminal **10,** and a ship identification number of a ship mounted with the ID number VDES terminal **10** at all times. Thus, the VDES terminal **10A** can grasp on which ship the VDES terminal **10B** is mounted by receiving an attribute signal transmitted by the VDES terminal **10B.** As a result, it is also possible to perform direct communication (including both open communication (communication that the server **2** or the like also can hear) and close communication (communication that a third party cannot hear)) between the VDES terminal **10A** and the VDES terminal **10B.** For example, it is possible to perform direct communication between the VDES terminal **10A** and the VDES terminal **10B** by sending, from the VDES terminal **10A,** a terminal transmission signal designating attribute information on the VDES terminal **10B** and information for direct communication.

### <Direct communication function between the VDES terminal 10 and the mobile terminal M>

Meanwhile, since the mobile terminal **M** mounted with a VDES application cannot send or receive a VHF wave, the mobile terminal **M** cannot send or receive the above-described attribute signal transmitted by the VDES terminal **10.** Thus, one of the mobile terminal **M** and the VDES terminal **10** cannot directly obtain information on the other terminal, and these terminals cannot perform the above-described direct communication. Although the mobile terminals **M** mounted with a VDES application can directly communicate with each other via the mobile phone communication network **MN,** it is substantially difficult for those terminals to perform direct communication because one terminal cannot recognize the other.

The data communication system **1** in a ship of the present embodiment can enable direct communication between a particular VDES terminal **10** and the mobile terminal **M** mounted with a particular VDES application by the following method.

Note that the explanation below assumes that information on a VDES application, information on a ship mounted with the mobile terminal **M** installed with the VDES application, and information relating to sailing of the ship mounted with the mobile terminal **M** (e.g., location information on the ship or the like) are appropriately sent from the VDES application to the server **2,** and said information is stored in the storage unit **14** of the server **2.**

First, the VDES terminal **10** is equipped with a capturing means such as a camera for capturing a ship with which communication is desired. The capturing means may be provided to the VDES terminal **10** itself, but may be connected to the VDES terminal **10.** When the capturing means is connected to the VDES terminal **10,** a component by which the VDES terminal **10** can obtain information relating to the capturing means described below as data, is required.

Further, the control unit **13** of the VDES terminal **10** is provided with the above-described function of obtaining location information on the VDES terminal **10** and a function of generating image data based on an image captured by the capturing means. The function of generating image data is a function of generating image data while adding information relating to a situation of capturing by the capturing means to an image file captured by the capturing means. The information relating to a situation of capturing by the capturing means refers to, for example, location information on the VDES terminal **10** or information relating to the capturing means in a situation in which an image was captured. The information relating to the capturing means can include a direction of an optical axis of the capturing means (that is, an azimuth of a ship with which communication is desired as seen from the VDES terminal **10),** a specification of the capturing means, and the like. Further, when the control unit **13** can estimate a distance from the VDES terminal **10** to a ship from an object other than the ship (such as a human or a cargo) in an image, the estimated distance may be also comprised in the image data.

In addition, the control unit **13** of the VDES terminal **10** is provided with a function of generating a terminal transmission signal comprising image data and information on a desire to perform direct communication.

Meanwhile, the server **2** is provided with the following functions.

First, the server control unit **3** is provided with a function of identifying a location (such as latitude and longitude) of a ship captured in image data at a time when an image was captured based on location information on the VDES terminal **10** and the image data comprised in a terminal transmission signal.

Further, the server control unit **3** is provided with a function of identifying a ship present at the identified latitude and longitude at the time when the image was captured from information relating to a VDES application stored in the storage unit **14** and identifying a VDES application installed in the mobile terminal **M** mounted on the ship.

Furthermore, the server control unit **3** is provided with a function of forming a transmission signal comprising information that the VDES terminal **10** that is a transmission source desires direct communication with the identified VDES application.

In addition, the server control unit **3** is provided with a function of forming a line that enables direct communication between the VDES terminal **10** that is a transmission source and the identified VDES application after the identified VDES application sends, to the transmission signal, a mobile transmission signal comprising information that direct communication is accepted.

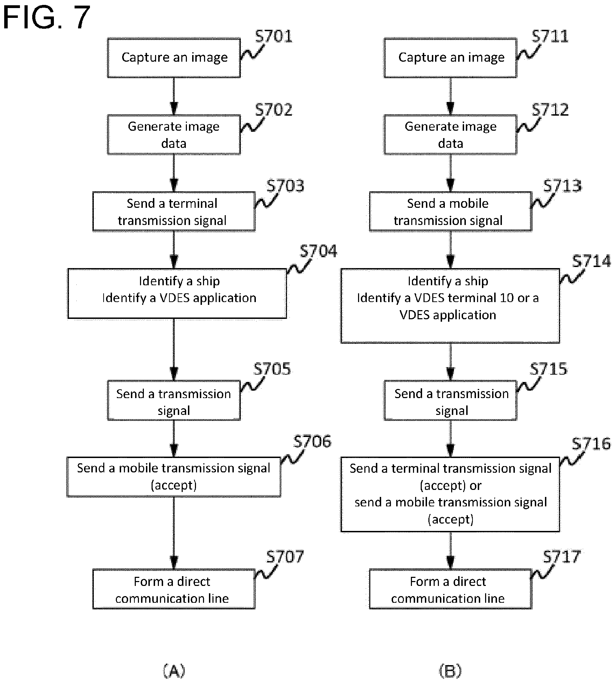

If the above-described functions are provided to the VDES terminal **10** and the server **2,** it is possible to perform direct communication from a ship mounted with the VDES terminal **10** to a ship not having the VDES terminal **10** via the server **2** and the mobile phone communication network **MN** according to the following procedures (see Figure **7(A)****).** Specifically, at step **S701,** the capturing means of the VDES terminal **10** captures a ship with which communication is desired. Next, at step **S702,** the VDES terminal **10** generates image data comprising the captured image. At step **S703,** the VDES terminal **10** transmits a terminal transmission signal comprising the image data generated at step S702 to the server **2.** Then, at step **S704,** the server **2** receives the terminal transmission signal and identifies a ship captured in the image of the image data and a VDES application installed in the mobile terminal **M** mounted on the ship. Once the VDES application is identified, at step **S705,** the server **2** generates a transmission signal comprising information that the VDES terminal **10** that is a transmission source desires direct communication with the identified VDES application and sends the generated transmission signal to the identified VDES application. Once the identified VDES application receives the transmission signal and accepts direct communication with the VDES terminal **10** that is a transmission source, at step **S706,** the identified VDES application sends a mobile transmission signal comprising information that direct communication is accepted. At step **S707,** once the server **2** receives the mobile transmission signal sent at step **S706,** the server **2** forms a line which enables direct communication between the VDES terminal **10** that is a transmission source and the identified VDES application. In this manner, it is possible to perform direct communication between the VDES terminal **10** that is a transmission source and the identified VDES application.

When information on a ship with which direct communication is desired, that is, information on the VDES application installed in the mobile terminal **M** mounted on the ship, is grasped, steps **S701** and **S702** are omitted, and a terminal transmission signal transmitted by the VDES terminal **10** at step **S703** may comprise information on a desire to perform direct communication and information on the VDES application. In this case, the server **2** only needs to identify the VDES application based on the above information and form a line which directly connects the identified VDES application and the VDES terminal **10** that is a transmission source.

Further, direct communication is not limited to a one-to-one communication line. That is, a communication line which connects a plurality of VDES terminals **10** and one VDES application or a communication line which connects one VDES terminal **10** and a plurality of VDES applications may be formed. In this case, a terminal transmission signal transmitted by the VDES terminal(s) **10** as a transmission source may designate a plurality of ships as a ship with which communication is desired.

In the above-described example, the case where direct communication is desired from the side of the VDES terminal **10** was explained. However, when direct communication is desired from the side of the mobile terminal **M** installed with a VDES application to a ship having the VDES terminal **10** or a ship mounted with another mobile terminal **M** installed with a VDES application, the VDES application needs to be provided with an equivalent function to that of the VDES terminal **10** as described above.

Specifically, the mobile terminal **M** installed with the VDES application is equipped with a capturing means such as a camera for capturing a ship with which communication is desired. The capturing means may be provided to the mobile terminal **M** itself, but may be connected to the mobile terminal **M.** When the capturing means is connected to the mobile terminal **M,** a component by which the VDES application can obtain information relating to the capturing means described below as data, is required.

Further, the VDES application is provided with the above-described function of obtaining location information on the mobile terminal **M** installed with the VDES application and a function of causing the mobile terminal **M** to exhibit a function of generating image data based on an image captured by the capturing means. The function of generating image data is a function of generating image data while adding information relating to a situation of capturing by the capturing means to an image file captured by the capturing means. The information relating to a situation of capturing by the capturing means refers to, for example, location information on the mobile terminal **M** or information relating to the capturing means in a situation in which an image was captured. The information relating to the capturing means can include a direction of an optical axis of the capturing means (that is, an azimuth of a ship with which communication is desired as seen from the mobile terminal **M),** a specification of the capturing means, and the like. Further, when the control unit **13** can estimate a distance from the mobile terminal **M** to a ship from an object other than the ship (such as a human or a cargo) in an image, the estimated distance may be also comprised in the image data.

In addition, the VDES application is provided with a function of exhibiting a signal generating function of generating a mobile transmission signal comprising image data and information on a desire to perform direct communication.

Meanwhile, the server **2** is provided with the following functions.

First, the server control unit **3** is provided with a function of identifying a location (such as latitude and longitude) of a ship captured in image data at a time when an image was captured based on location information on the mobile terminal **M** installed with the VDES application and the image data comprised in a mobile transmission signal.

Further, the server control unit **3** is provided with a function of identifying a ship present at the identified latitude and longitude at the time when the image was captured from information relating to the VDES terminal **10** or information relating to a VDES application stored in the storage unit **14** and identifying a VDES terminal **10** mounted on the ship or a VDES application installed in the mobile terminal **M** mounted on the ship.

Furthermore, the server control unit **3** is provided with a function of forming a transmission signal comprising information that the VDES application that is a transmission source desires direct communication with the identified VDES terminal **10** or identified VDES application.

In addition, the server control unit **3** is provided with a function of forming a line that enables direct communication between the VDES application that is a transmission source and the identified VDES terminal **10** or identified VDES application after the identified VDES terminal **10** or identified VDES application sends, to the transmission signal, a terminal transmission signal or mobile transmission signal comprising information that direct communication is accepted.

If the above-described functions are provided to a VDES application and the server **2,** it is possible to perform direct communication from a ship mounted with a mobile terminal M installed with the VDES application to a ship mounted with the VDES terminal **10** or another mobile terminal **M** installed with the VDES application via the server **2** and the mobile phone communication network **MN** (see Figure **7(B)****).** Specifically, at step **S711,** the capturing means of the mobile terminal **M** installed with the VDES application **10** captures a ship with which communication is desired. Next, at step **S712,** the mobile terminal **M** installed with the VDES application **10** generates image data comprising the captured image. At step **S713,** the mobile terminal **M** installed with the VDES application **10** transmits a mobile transmission signal comprising the image data generated at step **S712** to the server **2.** Then, at step **S714,** the server **2** receives the mobile transmission signal and identifies a ship captured in the image of the image data and a VDES terminal **10** mounted on the ship or a VDES application installed in the mobile terminal **M** mounted on the ship. Once the VDES terminal **10** or the VDES application is identified, at step **S715,** the server **2** generates a transmission signal comprising information that the VDES application that is a transmission source desires direct communication with the identified VDES terminal **10** or identified VDES application and sends the generated transmission signal to the identified VDES terminal **10** or identified VDES application. Once the identified VDES terminal **10** or identified VDES application receives the transmission signal and accepts direct communication with the VDES application that is a transmission source, at step **S716,** the identified VDES terminal **10** sends a terminal transmission signal comprising information that direct communication is accepted or the VDES application sends a mobile transmission signal comprising information that direct communication is accepted. At step **S717,** once the server **2** receives the terminal transmission signal or the mobile transmission signal sent at step **S716,** the server **2** forms a line which enables direct communication between the VDES application that is a transmission source and the identified VDES terminal **10** or VDES application. In this manner, it is possible to perform direct communication between the VDES application that is a transmission source and the identified VDES terminal **10** or identified VDES application.

When information on a ship with which direct communication is desired, that is, information on the VDES terminal **10** mounted on the ship or information on the VDES application installed in the mobile terminal **M,** is grasped, steps **S711** and **S712** are omitted, and a mobile transmission signal transmitted from the mobile terminal **M** installed with the VDES application at step **S713** may comprise information on a desire to perform direct communication and information on the VDES terminal **10** or information on the VDES application installed in the mobile terminal **M.** In this case, the server **2** only needs to form a line which directly connects the VDES application and the VDES terminal **10** or a line which connects the VDES applications based on the above-described information.

Further, direct communication between mobile terminals **M** mounted with a VDES application does not necessarily need to be a line via the server **2.** That is, if mobile terminals **M** installed with a VDES application can be grasped, one mobile terminal **M** can grasp the phone number of the other mobile terminal **M.** Thus, it is possible to make a call or exchange data between the mobile terminals **M** only via the mobile phone communication network **MN** without via the server **2.**

The above-described method enabling direct communication was explained using an example of communication between the VDES terminal **10** and the mobile terminal **M** installed with a VDES application or communication between the mobile terminals **M** mounted with a VDES application. However, this method can be applied to communication between any terminal devices capable of communicating with the server **2,** including communication between the VDES terminals **10.**

At this time, a terminal device can comprise an image obtaining means, a communicating means, a processor, and a storage unit.

The image obtaining means is configured to obtain an image of a ship with which communication is desired. For example, the image obtaining means may be a camera or may be a means for communicating with an external camera to obtain an image from the external camera. In the former case, the camera can be a camera mounted on the mobile terminal **M.** In the latter case, the external camera can be, for example, a camera mounted on a ship mounted with the VDES terminal **10.**

The communication unit is configured to communicate with the server **2** and other terminal devices. The communication unit can send and receive a radio wave with any frequency by utilizing any other communication system. For example, the communication unit may be implemented as the communication unit **11** of the VDES terminal **10** described above or may be implemented by a sending and receiving function exhibited by the above-described VDES application or a communicating function equipped in the mobile terminal **M.**

For example, the communication unit sends image data of an image of a ship with which communication is desired obtained by the image obtaining means to the server **2.** At this time, the terminal device may also send information on a time when the image was captured to the server **2.** This enables the server **2** to utilize the information on a time along with the image data, whereby the accuracy of identification of a ship can be improved. The communication unit can communicate with other terminal devices by utilizing a communication line formed by the server **2.**

The processor executes processing of the terminal device and also controls the action of the overall terminal device. The processor reads out a program stored in the storage unit and executes the program. This enables the terminal device to function as a system for executing a desired step. The processor may be implemented by a single processor or may be implemented by a plurality of processors.

A program necessary for executing processing of the terminal device, data necessary for executing the program, and the like are stored in the storage unit. A program for causing the processor to perform processing to enable communication between terminal devices (e.g., a program which materializes processing performed by a terminal device in the flow shown in Figure **8** described below) may be stored in the storage unit. In this case, a program may be stored in the storage unit in any manner. For example, a program may be preinstalled in the storage unit. Alternatively, a program may be installed in the storage unit by being downloaded via a network. In this case, the network may be any type. Alternatively, a program may be stored in a computer-readable storage medium and installed in the storage unit by reading the computer-readable storage medium. The storage unit can be implemented by any storing means.

Each of the components of the above-described terminal device may be configured by a single hardware part or may be configured by a plurality of hardware parts. When each of the components is configured by a plurality of hardware parts, the hardware parts may be connected in any manner. The hardware parts may be wirelessly connected or may be connected by wire. The terminal device is not limited to a particular hardware configuration. Configuring the processor by an analog circuit instead of a digital circuit also remains within the scope of the present invention. The configuration of the terminal device is not limited to those described above as long as the function thereof can be materialized.

Figure **8** shows one example of a dataflow between the server **2** and terminal devices. The present example is explained by using the case where a first terminal device is mounted on a first ship while a second terminal device is mounted on a second ship and a sailor on the first ship desires to communicate with a sailor on the second ship as an example.

At step **S801,** the image obtaining means of the first terminal device obtains an image of the second ship. Image data of the obtained image is given to the processor of the first terminal device. The processor of the first terminal device can generate a transmission signal comprising the image data. At this time, the image data can comprise information on a time when the image was captured.

At step **S802,** the processor of the first terminal device sends the generated transmission signal to the server **2** via the communication unit. The server control unit **3** of the server **2** receives the sent transmission signal.

At step **S803,** the server control unit **3** (identifying means) of the server device **2** identifies the second terminal device on the second ship based on the image data. For example, the identifying means can identify a ship captured in the image by image analysis and identify a terminal device mounted on the identified ship as the second terminal device. More preferably, for example, the identifying means can identify the second terminal device based on the image data received from the first terminal device and location information on the first terminal device and the second terminal device. At this time, the image data is image data of a captured image of a ship mounted with the second terminal device, which can comprise information on a time when the image was captured. Furthermore, for example, the location information can be comprised in a receipt signal from each of the first terminal device and the second terminal device which is received prior to step **S803.** For example, the identifying means can: identify a location of a ship captured in an image based on the location information on the first terminal device at a time when the image was captured; and identify a ship present in the identified location at the time when the image was captured as a ship mounted with the second terminal device. By doing so, the second terminal device with which communication is desired can be identified at a higher accuracy.

At step **S804,** the server control unit **3** of the server **2** generates a transmission signal comprising information that the first terminal device desires to communicate and sends the generated transmission signal to the second terminal device identified at step **S803.** The processor of the second terminal device can receive the transmission signal via the communication unit.

At step **S805,** a user of the second terminal device (e.g., a sailor on the second ship) accepts communication with the first terminal device and inputs the acceptance into the second terminal device.

At step **S806,** the processor of the second terminal device generates a transmission signal comprising information that communication with the first terminal device is accepted and sends the generated transmission signal to the server **2** via the communication unit. The server control unit **3** of the server **2** can receive the sent transmission signal.

At step **S807,** the server control unit **3** (forming means) of the server device **2** forms a communication line between the first terminal device and the second terminal device. For example, the communication line may be a communication line using a VDES, may be a communication line using a mobile phone communication network, may be a communication line using both a VDES and a mobile phone communication network, or may be a communication line using any other communication system.

At step **S808,** the server control unit **3** of the server device **2** sends information on the communication line formed at step **S807** to the first terminal device and the second terminal device.

At step **S809,** communication between the first terminal device and the second terminal device is performed via a communication line identified from the information on the communication line received at step **S808.**

In this manner, the server **2** can identify the second terminal device on the ship that is a communication destination based on image data received from the first terminal device and form a communication line between the first terminal device and the second terminal device. The first terminal device can receive information on the formed communication line from the server **2** and communicate with the second terminal device on the ship that is a destination via the communication line.

### <When a relay apparatus 30 is provided>

In one embodiment, the data communication system **1** may be provided with a relay apparatus **30** which receives an information signal (transmission signal or terminal transmission signal) transmitted from the server **2** or the VDES terminal **10.** In other words, the data communication system **1** can comprise the server **2** and the relay apparatus **30.** Alternatively, the data communication system **1** can comprise the server **2,** the relay apparatus **30,** and a terminal device. If the relay apparatus **30** is provided, a transmission signal or a terminal transmission signal with sufficient signal intensity can be sent to a place that a transmission signal or a terminal transmission signal cannot reach (or a place where signal intensity becomes weaker, which may be hereinafter simply referred to as an unreachable place) directly or even by using a VDES satellite **ST** (see Figure **1****)** .

For example, the relay apparatus **30** is provided with a receiving function **31** of receiving a transmission signal or a terminal transmission signal received from the server **2** or the VDES terminal **10** directly or through a VDES satellite **ST** and a transmitting function **32** of transmitting the transmission signal or the terminal transmission signal received by the receiving function **31.** Thus, even a ship located in an unreachable place can receive a transmission signal or a terminal transmission signal as long as the ship is in an area where a transmission signal or a terminal transmission signal can be supplied from the relay apparatus **30.**

Further, the relay apparatus **30** that has received a transmission signal or a terminal transmission signal may have a function of transmitting the received transmission signal or terminal transmission signal to a predetermined condition or a predetermined area. In this case, the relay apparatus **30** is provided with an information obtaining function **33** of obtaining information relating to sailing on the sea from an information signal received by the receiving function. That is, the information obtaining function **33** analyzes a transmission signal or a terminal transmission signal received by the receiving function to extract information relating to sailing on the sea comprised in the transmission signal or the terminal transmission signal. In addition, the information obtaining function **33** is provided with a function of adjusting a period for transmitting a transmission signal or a terminal transmission signal and/or intensity of a signal to be transmitted by the transmitting function **32** (modulating means) based on a signal comprised in the information relating to sailing on the sea. The function of adjusting a period for transmitting a transmission signal and/or a terminal transmission signal and intensity of a signal to be transmitted by the transmitting function **32** may be executed by, for example, a control signal sent from the server **2.** In other words, the server **2** can send a control signal to the relay apparatus **30** to cause the relay apparatus **30** to modulate a period for transmitting a signal and/or intensity of a signal to be transmitted.

With the above configuration, a transmission signal or a terminal transmission signal can be provided from the relay apparatus **30** to only a ship (subject ship) present in a predetermined area at a predetermined time. Thus, information necessary for the VDES terminal **10** of the subject ship can be selected and provided as compared to the case where a large number of transmission signals or terminal transmission signals are supplied. As a result, important information of information relating to sailing on the sea in the subject ship can be more easily displayed on the display unit **12** of the VDES terminal **10.** Thus, an operator can rapidly and easily grasp important information.

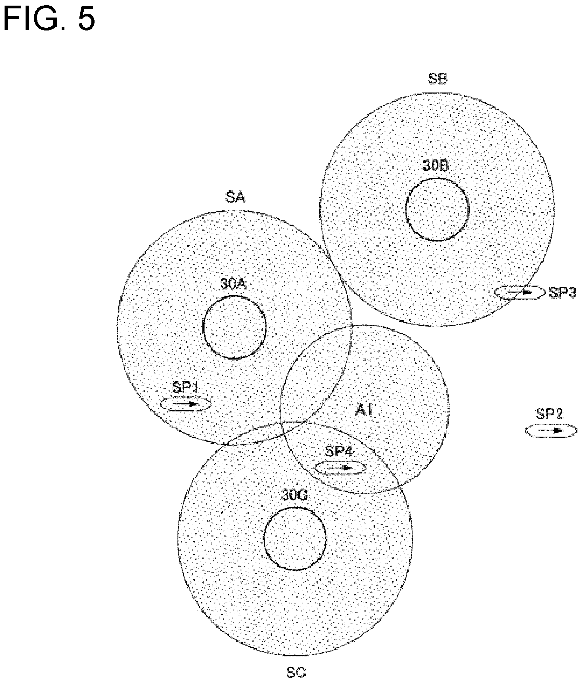

For example, if an event such as falling overboard or capsize occurs, a ship which is going to reach a certain area in which the event occurred or a ship present near the certain area can reach the certain area within a time in which rescue is possible. On the other hand, if the ship is far away from the certain area, the ship cannot reach the certain area within a time in which rescue is possible. Thus, information on an area from which it is possible to reach the certain area within a time in which rescue is possible (possible sea area: the area of **A1** in Figure **5****)** is comprised in a transmission signal and a terminal transmission signal (they are collectively referred to as particular information) comprising information on the event. Therefore, the information obtaining function **33** of the relay apparatus **30** which has received the particular information transmits the particular information to a possible sea area (possible sea area: the areas of **SA** and **SC** in Figure **5****)** based on the particular information when the particular information can be transmitted to the possible sea area. That is, the information obtaining function **33** of the relay apparatus **30** adjusts the intensity and the range of the particular information to be transmitted, such that the particular information can be properly provided to ships **(SP1** and **SP4** in Figure **5****)** present in the possible sea area **A1.** Further, since the relay apparatus **30** in which the information obtaining function **33** has determined that the particular information cannot be transmitted to a possible sea area (possible sea area; **30B** in Figure **5****)** transmits other information signals or transmission signals without transmitting the particular information, information other than the particular information can be provided to a ship **(SP3** in Figure **5****)** present outside the possible sea area.

For a phenomenon which moves over time, such as a typhoon or a storm, the area in which a typhoon or a storm is present (presence area) changes over time. In this case, the presence area and temporal movement thereof are comprised in particular information. Thus, the information obtaining function **33** of the relay apparatus **30** which has received the particular information transmits the particular information to an area which will be the presence area at a certain time and an area near the presence area (e.g., an area which will be the presence area after a certain time) (they are collectively referred to as a dangerous area) based on the particular information when the particular information can be transmitted to the dangerous area. That is, the information obtaining function **33** of the relay apparatus **30** adjusts the intensity and the range of the particular information to be transmitted, such that the particular information can be properly provided to a ship present in the dangerous area. If the particular information can no longer be transmitted to the dangerous are over time, the information obtaining function **33** of the relay apparatus **30** stops transmitting the particular information and transmits a transmission signal and a terminal transmission signal other than the particular information.

Furthermore, the relay apparatus **30** in which the information obtaining function **33** has determined that the particular information cannot be transmitted to the dangerous area sends other transmission signals and terminal transmission signals without transmitting the particular information. Thus, information other than the particular information can be provided to a ship present outside the dangerous area.

Further, while the information obtaining function **33** of the relay apparatus **30** may directly transmit a transmission signal or a terminal transmission signal received by the receiving function **31,** the information obtaining function **33** may have a function of generating a relay transmission signal based on information relating to sailing on the sea comprised in the transmission signal or the terminal transmission signal. In other words, the relay apparatus can comprise an obtaining means for obtaining information relating to sailing on the sea and a generating means for generating a relay transmission signal based on the obtained information. For example, the obtaining means can obtain location information on the relay apparatus **30** and information such as time at which an information signal or the like was received, and if a sensor such as a barometer is provided to the relay apparatus **30** itself or a buoy or the like provided with the relay apparatus **30,** the obtaining means can obtain a measurement or the like of the sensor. The generating means can generate a relay transmission signal by adding the obtained information to the received transmission signal or terminal transmission signal. In this case, information on an environment or the like surrounding the relay apparatus **30** can be provided to the server **2** or the VDES terminal **10.**

When the information obtaining function **33** of the relay apparatus **30** generates a relay transmission signal, only the generated transmission signal may be transmitted from the transmitting function **32,** or both the generated relay transmission signal and the transmission signal or terminal transmission signal as it was received may be transmitted from the transmitting function **32.**

Although the place in which the above-described relay apparatus **30** is placed is not particularly limited, if the relay apparatus **30** is provided on the sea, a transmission signal or a terminal transmission signal with sufficient signal intensity can be sent even to an unreachable place such as a sea area away from the ground or a sea area which is close to the ground but difficult to access from the ground. In this case, the relay apparatus **30** itself may be configured to float, or the relay apparatus **30** may be placed on a floating body. For example, the relay apparatus **30** can be placed on a buoy or the like provided on the sea.

In the above-described example, the case where a transmission signal or a terminal transmission signal is provided from the relay apparatus **30** to only a ship (subject ship) present in a predetermined area at a predetermined time was explained. This function may be provided to the VDES terminal **10.** That is, the control unit **13** of the VDES terminal **10** is provided with a function of transmitting a received transmission signal or terminal transmission signal from the communication unit **11** as a terminal transmission signal based on information relating to sailing on the sea obtained from the received transmission signal or terminal transmission signal. That is, the VDES terminal **10** may transmit a transmission signal transmitted by the server **2** or a terminal transmission signal transmitted by another VDES terminal **10** as a terminal transmission signal from the VDES terminal **10** instead of a terminal transmission signal generated by the control unit **13** of the VDES terminal **10.** Note that when a ship mounted with the VDES terminal **10** moves, it is desirable that the control unit **13** of the VDES terminal **10** adjusts a transmission time or a transmission area based on sailing of the ship to transmit a received transmission signal or terminal transmission signal or a generated terminal transmission signal from the communication unit **11.**

### <Regarding the VDES terminal 10>

The VDES terminal **10** may be one whole apparatus comprising all functions, that is, a dedicated VDES terminal, but the communication unit **11** and other functions may be provided to separate bodies. That is, a detachable communication body **10A** and display body **10B** may be provided, the communication unit **11** may be provided to the communication body **10A,** and the control unit **13** and the display unit **12** may be provided to the display body **10B** as shown in Figure **3(C)****.** In this case, it is also possible to use a general tablet terminal or the like as the display body **10B** while using a high function or dedicated apparatus which receives a VHF wave as the communication body **10A.** Thus, capital investment can be reduced because a reasonable apparatus can be used for the display body **10B** even if the communication body **10A** is expensive. Further, if the display body **10B** is detached from the communication body **10A** to perform an operation, an operation of creating information comprised in a terminal transmission signal using the display body **10B** or an operation of analyzing information relating to sailing on the sea comprised in a received transmission signal or terminal transmission signal can be more easily performed. Furthermore, since a sailor can use an individual display body **10B,** an operation can be divided among sailors, whereby the efficiency of an operation such as information analysis or terminal transmission signal creation can be increased.

Note that the mechanism for detaching the communication body **10A** and the display body **10B** and the method for performing data communication between the communication body **10A** and the display body **10B** are not particularly limited. A general interface which connects a tablet terminal and a communication apparatus or the like can be used.

Further, the display body **10B** is not limited to a tablet terminal, but can be anything as long as it can function as the control unit **13** and the display unit **12.** A smartphone, a laptop computer and the like can also be used as the display body **10B.**

Although the above-described example was explained by using a ship sailing on the sea as an example, the present invention is not limited thereto. The present invention can be obviously applied to a ship sailing on any water such as rivers or lakes apart from the sea.

### [Industrial Applicability]

The data communication system in a ship of the present invention is suitable as a system for providing information necessary for a ship on the sea.

### [Reference Signs List]

- **1**: data communication system in a ship
- **2**: server
- **3**: server control unit
- **4**: storage unit
- **5**: input unit
- **10**: VDES terminal
- **10A**: communication body
- **10B**: display body
- **11**: communication unit
- **12**: display unit
- **13**: server control unit
- **14**: storage unit
- **30**: relay apparatus
- **31**: receiving function
- **32**: transmitting function
- **33**: information obtaining function
- **SP**: ship
- **BS**: base station
- **M**: mobile terminal
- **MN**: mobile phone communication network
- **MS**: mobile phone base station
- **ST**: VDES satellite

## Claims

1. A server device capable of communicating with a plurality of terminal devices on a plurality of ships, the server device comprising:
a communicating means which is configured to communicate with the plurality of terminal devices, the communicating means receiving a transmission signal from a first terminal device on a first ship of the plurality of ships, wherein the transmission signal comprises image data of an image of a second ship of the plurality of ships captured on the first ship;
an identifying means which is configured to identify a second terminal device on the second ship based on the image data; and
a forming means which is configured to form a communication line between the first terminal device and the second terminal device.

2. The server device of claim 1, further comprising an obtaining means for obtaining location information on the plurality of terminal devices,
wherein the image data comprises information on a time when the image was captured, and
wherein the identifying means is configured to:
identify a location of a ship captured in the image based on location information on the first terminal device at the time when the image was captured; and
identify a ship present in the location at the time when the image was captured as the second ship.

3. The server device of claim 1 or 2, wherein the communicating means is further configured to communicate with a relay apparatus, and the communicating means receives a relay transmission signal generated by the relay apparatus from the relay apparatus.

4. The server device of claim 3, wherein the communicating means sends a control signal to the relay apparatus to cause the relay apparatus to modulate a period for transmitting a signal and/or intensity of a signal to be transmitted.

5. The server device of any one of claims 1 to 4, wherein at least one of the first terminal device and the second terminal device is a VDES terminal.

6. The server device of claim 5, wherein the communicating means communicates with the at least one of the first terminal device and the second terminal device by utilizing a VDES.

7. The server device of any one of claims 1 to 6, wherein at least one of the first terminal device and the second terminal device is a mobile terminal comprising a VDES application.

8. The server device of claim 7, wherein the communicating means communicates with the at least one of the first terminal device and the second terminal device via a mobile phone communication network.

9. A method executed in a server device capable of communicating with a plurality of terminal devices on a plurality of ships, the method comprising:
receiving a transmission signal from a first terminal device on a first ship of the plurality of ships, wherein the transmission signal comprises image data of an image of a second ship of the plurality of ships captured on the first ship;
identifying a second terminal device on the second ship based on the image data; and
forming a communication line between the first terminal device and the second terminal device.

10. A program executed in a server device capable of communicating with a plurality of terminal devices on a plurality of ships, the server device comprising a processor, wherein the program causes the processor to perform processing comprising:
receiving a transmission signal from a first terminal device on a first ship of the plurality of ships, wherein the transmission signal comprises image data of an image of a second ship of the plurality of ships captured on the first ship;
identifying a second terminal device on the second ship based on the image data; and
forming a communication line between the first terminal device and the second terminal device.

11. A data communication system comprising:
the server device of any one of claims 1 to 8; and
a relay apparatus comprising a communicating means for communicating with the server device and the plurality of terminal devices.

12. The data communication system of claim 11, wherein the relay apparatus further comprises a modulating means for modulating a period for transmitting a signal and/or intensity of a signal to be transmitted based on information received from at least one of the plurality of terminal devices and/or the server device.

13. The data communication system of claim 11 or 12, wherein the relay apparatus further comprises:
an obtaining means for obtaining information relating to sailing on the water; and
a generating means for generating an information signal based on the obtained information, and
wherein the communicating means sends the information signal to at least one of the plurality of terminal devices and/or the server device.

14. A terminal device mounted on a ship, the terminal device comprising:
an image obtaining means for obtaining an image of a ship with which communication is desired; and
a communicating means which is configured to communicate with a terminal device on another ship and a server device, the communicating means being configured to:
send a transmission signal to the server device, wherein the transmission signal comprises image data of an image of the another ship obtained by the image obtaining means; and
communicate with the terminal device on the another ship via a communication line with the terminal device on the another ship which is formed by the server device based on the image data.

15. The terminal device of claim 14, wherein the communicating means is further configured to modulate a period for transmitting a signal and/or intensity of a signal to be transmitted.

16. The terminal device of claim 14 or 15, wherein the terminal device comprises:
a communication body having the communicating means; and
a display body having a control unit and a display unit, wherein the display body is detachable from the communication body.

17. A method executed in a terminal device mounted on a ship, the method comprising:
obtaining an image of another ship with which communication is desired;
sending a transmission signal to a server device, wherein the transmission signal comprises image data of the image of the another ship obtained by the image obtaining means; and
communicating with a terminal device on the another ship via a communication line with the terminal device on the another ship which is formed by the server device based on the image data.

18. A program executed in a terminal device mounted on a ship, the terminal device comprising a processor, wherein the program causes the processor to perform processing comprising:
obtaining an image of another ship with which communication is desired;
sending a transmission signal to a server device, wherein the transmission signal comprises image data of the image of the another ship obtained by the image obtaining means; and
communicating with a terminal device on the another ship via a communication line with the terminal device on the another ship which is formed by the server device based on the image data.

19. A data communication system comprising:
the server device of any one of claims 1 to 8; and
the terminal device of any one of claims 14 to 16.

20. The data communication system of any one of claims 11 to 13, further comprising the terminal device of any one of claims 14 to 16.
